# EUROPEAN PATENT SPECIFICATION

(11) **EP 2 565 284 B1**
(45) Date of publication and mention of the grant of the patent: **09.10.2019**
(21) Application number: 11774394.8
(22) Date of filing: 27.04.2011
(51) Int. Cl.: C22B 58/00, C22B 3/24, C25C 1/22

(54) **METHOD FOR EXTRACTING GALLIUM FROM FLY ASH**
VERFAHREN ZUR EXTRAKTION VON GALLIUM AUS FLUGASCHE
PROCÉDÉ D'EXTRACTION DE GALLIUM À PARTIR DE CENDRES VOLANTES

(30) Priority: 27.04.2010 CN 201010161837
(43) Date of publication of application: 06.03.2013
(73) Proprietor: China Shenhua Energy Company Limited, Beijing 100011 (CN)
(72) Inventor: LING, Wen, Beijing 100011 (CN); JIANG, Yinshan, Beijing 100011 (CN); WEI, Cundi, Beijing 100011 (CN); LI, Nan, Beijing 100011 (CN); GU, Dazhao, Beijing 100011 (CN); GUO, Zhaohua, Beijing 100011 (CN); YANG, Dianfan, Beijing 100011 (CN); CHI, Junzhou, Beijing 100011 (CN); ZOU, Ping, Beijing 100011 (CN)
(74) Representative: Bockhorni & Brüntjen Partnerschaft Patentanwälte mbB
(86) International application number: PCT/CN2011/073402
(87) International publication number: WO 2011/134403

(56) References cited:
- CN-A- 101 368 231
- CN-A- 101 864 525
- JP-A- 60 215 721
- US-A1- 2004 244 537
- BEATRIZ GUTIÉRREZ ET AL: "Recovery of Gallium From Coal Fly Ash By a Dual Reactive Extraction Process", WASTE MANAGEMENT AND RESEARCH, ACADEMIC PRESS, LONDON, US, vol. 15, no. 4, 1 August 1997 (1997-08-01) , pages 371-382, XP009174637, ISSN: 0734-242X
- ZHENG F ET AL: "Recovery of gallium from coal fly ash", HYDROMETALLURGY, ELSEVIER SCIENTIFIC PUBLISHING CY. AMSTERDAM, NL, vol. 41, no. 2, 1 June 1996 (1996-06-01), pages 187-200, XP004040657, ISSN: 0304-386X, DOI: 10.1016/0304-386X(95)00055-L
- FONT ET AL: "Recovery of gallium and vanadium from gasification fly ash", JOURNAL OF HAZARDOUS MATERIALS, ELSEVIER, AMSTERDAM, NL, vol. 139, no. 3, 13 January 2007 (2007-01-13), pages 413-423, XP005829960, ISSN: 0304-3894, DOI: 10.1016/J.JHAZMAT.2006.02.041
- WANG NAIDONG ET AL.: 'Study on the Adsorption of Gallium by Macro-Porous Phosphoric Acid Resin' JOURNAL OF HANGZHOU UNIVERSITY vol. 13, no. 4, October 1986, pages 456 - 460, XP008162742
- REN XIANGJUN ET AL.: 'Processing Weak-Magnetic Iron Ores from Longyan Mines with Slon Pulsating Magnetic Separator' SOUTHERN METALS vol. 159, December 2007, pages 15 - 18, XP008162804

## Description

### Technical Field

The present invention relates to a method for extracting metal gallium from fly ash and in particular relates to a method for extracting metal gallium from circulating fluidized-bed fly ash.

### Background

Gallium is an important semiconductor material and widely used. The price of gallium is very high in the international market and thus gallium has a bright prospect. However, the reserve of gallium is low, only approximately 0.015% in the earth's crust. Gallium almost does not form minerals, but exists with other minerals in form of isomorphism. Therefore, extraction of gallium is considerably difficult. Gallium is often found in conjunction with aluminum and zinc in minerals in nature. As such, sulfide deposits of zinc and bauxite ore serve as a primary source of the extraction of gallium. Nowadays, more than 90% of gallium in the world is extracted from the by-product of alumina industry in which bauxite is used as a main raw material. The mother liquid used for the enrichment and separation of gallium is the mother liquid obtained from carbon precipitation (or seed precipitation) during the process for producing alumina. The main component of such mother liquid obtained from carbon precipitation (or seed precipitation) is a base sodium metaaluminate solution containing gallium. Main methods for extracting gallium from such base solution include a method for removing aluminum via lime cream and carbonation, dealumination method of carbonated lime milk two-stage decomposition method, precipitation method and resin adsorption method which develops in recent years.

The recent studies have shown that the fly ash obtained from some places contains a large amount of gallium which even overpasses the gallium level of mineral deposit. It has been verified by researches that the gallium content in the fly ash is usually 12-230 µg/g. As compared with the gallium contents of other resources, the fly ash deserves to be extracted for metal gallium as a raw material. In light of different conditions of calcinations, the fly ash is classified into pulverized coal-fired boiler fly ash and circulating fluidized-bed fly ash. The pulverized coal-fired boiler fly ash is produced when coal is burned at a very high temperature (1400-1600°C), in which alumina is in glassy state or present as a mineral form of mullite crystals or corundum crystals of hot aluminum mineral which make such alumina very stable. While the combustion temperature of circulating fluidized-bed fly ash is much lower than that of traditional pulverized coal-fired boiler fly ash, only about 850°C. Different combustion temperatures make a substantial difference in phase composition between the pulverized coal-fired boiler fly ash and circulating fluidized-bed fly ash, that is, amorphous kaolinite enters into the main phase composition of the circulating fluidized-bed fly ash, in which silicon dioxide, alumina and ferric oxide or the like possess excellent activity.

CN 200810051209.5 discloses a method for extracting both alumina and gallium from fly ash. In the method, sodium metaaluminate solution containing gallium is obtained by acid-leaching and alkali-leaching processes, and then gallium is enriched and separated via multiple-stage carbon precipitation - sodium hydroxide dissolution process.

CN 200710065366.7 discloses a method for extracting silicon dioxide, alumina and gallium oxide from high-alumina fly ash. The method comprises steps of treating the residues produced after the extraction of silicon dioxide from fly ash to obtain sodium metaaluminate solution containing gallium, using such solution as the mother liquid to enrich gallium via multiple-stage carbon precipitation-sodium hydroxide dissolution process and resin adsorption process.

CN 200710145132.3 discloses a method for co-producing gallium and alumina. The method comprises steps of treating fly ash to obtain sodium metaaluminate solution containing gallium, enriching gallium by the Bayer dissolving system and then separating the enriched gallium by adsorption process using chelating resin.

CN 200710141488.X discloses a method for producing gallium. The intermediate product, i.e. mother liquid of carbon precipitation, obtained from the process for producing alumina from fly ash is used as a raw material and reacts with sodium bicarbonate, and then subjects to a thorough carbonation, so as to obtain a gallium concentrate.

In the above patent documents, the mother liquid of carbon precipitation (or seed precipitation) obtained from the process for producing alumina from fly ash is used as a raw material for the enrichment and separation of gallium, that is, the mother liquid used for extracting gallium is a base sodium metaaluminate solution containing gallium.

CN 200810017872.3 discloses a process for extracting gallium from fly ash and coal gangue. In the process, an adsorption method via absorbent columns is used for extracting gallium from an aluminum chloride solution containing gallium which is obtained by mixing fly ash and sodium carbonate, subjecting the mixture to calcination followed by water leaching and carbon precipitating and then reacting with hydrochloride acid. Such process, as fly ash and sodium carbonate are mixed and calcined at a very high temperature before acid leaching, is suitable for extracting gallium from pulverized coal-fired boiler fly ash which has weak activity.

Jiazhen He et al. has reported "a research on technique of recycling gallium from fly ash" (Scientific Research, 2002, No.5, p23-26), in which the fly ash reacts directly with hydrochloride acid to yield an aluminum chloride solution containing gallium, without being calcined at a very high temperature, and then gallium is extracted by resin adsorption. The reaction temperature of the fly ash and hydrochloride acid is low (60°C), which makes the leaching efficiency of gallium very low (35.2%). Moreover, the resin for extraction used in the method is levextred resin (CL-TBP). The adsorptin principle of such resin is similar to that of solvent extraction. Such resin is obtained by polymerizing and curing the active group of an extracting agent with the base resin. Consequently, the adsorption efficiency of the resin is very low and the production cost is very high.

Beatriz Gutièrrez et al. has discussed investigations under the title "Recovery of Gallium From Coal Fly Ash By a Dual Reactive Extraction Process" in the journal (Waste Management and Research, Academic Press, London, vol. 15, no. 4, pages 371 - 382) wherein leaching and two-step extraction with two commercial extractants was used. Zheng Fang et al. has published the study "Recovery of gallium from coal fly ash", (Hydrometallurgy, Elsevier, vol. 41, no. 2, June 1996, pages 187 - 200) wherein a process for extraction of gallium from coal fly ash including acid leaching, impurity removal, foam extraction of gallium and its purification has been suggested. The methods of those documents are laboratory experiments.

### Summary of the Invention

The object of the invention is to provide an improved method for extracting metal gallium from circulating fluidized-bed fly ash.

The method for extracting metal gallium from circulating fluidized-bed fly ash according to the invention comprises the following steps:
a) crushing the fly ash to a size of 100 mesh or smaller, removing iron by wet magnetic separation, such that the ferric oxides content in the fly ash is reduced to 1.0wt% or less, then adding hydrochloride acid into the de-ironed fly ash for acid-leaching reaction, and subjecting the reaction product to solid-liquid separation, so as to yield a hydrochloric leachate having a pH value in the range of 1-3;
b) adsorbing gallium in the hydrochloric leachate by passing the same through a column loading with a macro-porous cationic resin; eluting the column with water or hydrochloride acid as an eluting agent when the adsorption reaches saturation to obtain a gallium-containing eluent;
c) adding sodium hydroxide solution into the gallium-containing eluent, separating precipitates after reaction by filtration to remove iron in the eluent and thus obtaining a gallium-containing sodium metaaluminate solution;
d) subjecting the gallium-containing sodium metaaluminate solution to carbonation by introducing carbon dioxide therein, followed by separating gallium from most aluminum and obtaining gallium-aluminum double salt with the mass ratio of gallium to alumina being more than 1:340; and
e) adding the obtained gallium-aluminum double salt into a sodium hydroxide solution, followed by subjecting the reactant to evaporation and concentration to obtain a base solution containing gallium and aluminum with the contents of gallium and alumina being 1 mol/l or more respectively, and then electrolyzing the base solution to obtain metal gallium.

Hereinafter the method according to the invention will be further described in detail, but the present invention is not limited thereto.

In step a) according to an embodiment of the invention, the fly ash includes, but is not limited to circulating fluidized-bed fly ash. In light of particle size distribution of the fly ash, the fly ash is crushed to a size of 100 mesh or smaller, removing iron contained in the crushed fly ash before the acid-leaching, such that the iron content in the fly ash is reduced to 1.0wt% or less. The methods for removing iron may be any conventional methods for removing iron, such as magnetic separation. Preferably, wet magnetic separation is used in the present invention. Any conventional magnetic separator suitable for removing iron from powder-like material may be used for the wet magnetic separation in the present invention, as long as the iron content of the fly ash can be reduced to 1.0wt% or less. The iron content in the fly ash is calculated on the basis of the weight of the dried fly ash containing no water.

Preferably, the magnetic separator used for fly ash is a vertical ring magnetic separator. Further preferably, the vertical ring magnetic separator comprises a rotating ring, an inductive medium, an upper iron yoke, a lower iron yoke, a magnetic exciting coil, a feeding opening, a tailing bucket and a water washing device, in which the feeding opening is used for feeding the coal ash to be de-ironed, the tailing bucket is used for discharging the non-magnetic particles after de-ironing, the upper iron yoke and the lower iron yoke are respectively arranged at the inner and outer sides of the lower portion of the rotating ring, the water washing device is arranged above the rotating ring, the inductive medium is arranged in the rotating ring, the magnetic exciting coil is arranged at the periphery of the upper iron yoke and the lower iron yoke so as to make the upper iron yoke and the lower iron yoke to be a pair of magnetic poles for generating a magnetic field in the vertical direction, and the inductive medium is layers of steel plate meshes, each steel plate mesh is woven by wires, and the edges of the wires have prismatic sharp angles.

Preferably, the upper iron yoke and the lower iron yoke are formed integrally, and are arranged, in a plane perpendicular to the rotating ring, to surround the inner and outer sides of the lower portion of the rotating ring.

Preferably, the vertical ring magnetic separator further comprises a pressure balance chamber water jacket disposed adjacent to the magnetic exciting coil.

Preferably, the steel plate mesh is made of 1Cr17.

Preferably, the magnetic exciting coil is a flat wire solenoid coil which is double glass envelope enamelled aluminum.

Preferably, the steel plate mesh has a medium layer spacing of 2-5 mm. More preferably, the steel plate mesh has a medium layer spacing of 3 mm.

Preferably, the steel plate mesh has a thickness of 0.8-1.5 mm, a mesh grid size of 3mm × 8 mm - 8mm × 15mm, and a wire width of 1-2 mm. More preferably, the steel plate mesh has a thickness of 1 mm, a mesh grid size of 5mm × 10mm, and a wire width of 1.6mm.

Preferably, the vertical ring magnetic separator further comprises a pulsating mechanism, which is coupled with the tailing bucket via a rubber plate.

Preferably, the inductive medium is provided in the entire circle of the rotating ring.

When the above-said vertical ring magnetic separator is used for magnetic separation for de-ironing, it is necessary to timely test the iron content in the slurry subject to the magnetic separation. When the iron content in the slurry is equal to or lower than a predetermined value, the slurry is discharged; when the iron content is higher than the predetermined value, the slurry is returned to the feeding opening for further magnetic separation. Such magnetic separation may be repeated 2-4 times, preferably 2-3 times.

Preferably, when the slurry is magnetically separated by the vertical ring magnetic separator, the vertical ring magnetic separator provides a magnetic field strength of 1.5 T (15,000 G) or more, further preferably 1,5 - 2 T (15,000-20,000 G), more preferably 1.5-1.75 T ( 15,000-17,500 G).

In step a) according to an embodiment of the invention, the filtered cake of the circulating fluidized-bed fly ash subject to magnetic separation is placed into an acid-resistant reactor and then the hydrochloride acid with a preferred concentration of 20-37wt% is added therein to perform acid dissolving reaction. In a preferred embodiment, the molar ratio of HCl contained in the hydrochloride acid to alumina contained in the fly ash is 4:1-9:1; the fly ash and hydrochloride acid reacts at a temperature in the range of 100-200 °C and under a pressure in the range of 0.1-2.5 MPa and the reaction time is 0.5-4.0 hours; and then the reaction product is subjected to a solid-liquid separation and rinse to yield an hydrochloric leachate having a pH value in the range of 1-3. The process for the solid-liquid separation may be any of conventional methods, such as settling separation, vacuum filtration, pressure filtration or centrifugation or the like.

In step b) according to an embodiment of the invention, said macro-porous cationic resin is preferably any one selected from D001, 732, 742, 7020H, 7120H, JK008 and SPC-1.

In step b) according to an embodiment of the invention, said macro-porous cationic resin may be strong-acid-cationic resin, such as styrene resins or acrylic resins. The essential performances of the resin include moisture content of 50.0-70.0%, exchange capacity of 3.60 mmol/g or more, volume exchange capacity of 1.20 mmol/g or more, bulk density in wet state of 0.60-0.80 g/ml, particle size of 0.315-1.250mm, available particle size of 0.400-0.700mm and maximum working temperature of 95 °C.

The gallium contained in the hydrochloric leachate obtained from step a) is adsorbed by passing the same through a column loading with the macro-porous cationic resin. The process for the adsorption may be any of conventional methods. However, it is preferred to conduct the adsorption in such a way that the hydrochloric leachate passes through the resin column from bottom to top at 20-90°C, such that the acid leachate flows upwards piston-like in the gaps of the resin, with a volume flux of 1-4 times over resin volume per hour. The resin column may be single column or two cascaded columns. In the step, while gallium in the hydrochloric leachate is enriched by being absorbed by the macro-porous cationic resin, iron in the hydrochloric leachate is simultaneously effectively adsorbed, so that a refined aluminum chloride solution with a low iron content is obtained, which can be then used for preparing aluminum chloride crystal and metallurgical-grade alumina with low iron content.

The macro-porous cationic resin may be eluted by an eluting agent to obtain a gallium-containing eluent when the adsorption reaches saturation. Preferably, the eluting agent is water or 2-10wt% hydrochloride acid. The conditions of elution may include that the eluting temperature is 20-60°C, the amount of the eluting agent is 1-3 times over the volume of the resin, the volume flux of the eluting agent is 1-3 times over resin volume per hour, and the eluting agent passes through the resin column in a top-in and bottom-out way during the elution.

The macro-porous cationic resin may regain adsorption capacity via regeneration. The resin may be regenerated with 2-10wt% hydrochloride acid. During the regeneration, the temperature is 20-60°C, the amount of the hydrochloride acid is 1-2 times over the volume of the resin, and the volume flux of the hydrochloride acid is 1-3 times over resin volume per hour, the hydrochloride acid passes through said resin column in a top-in and bottom-out way.

In step c) according to an embodiment of the invention, sodium hydroxide solution is added into the eluent under stirring and the mass ratio of alumina in the eluent to sodium hydroxide is 1:1-2:1, the eluent reacts with the sodium hydroxide solution at 20-100 °C, such that aluminum chloride and gallium chloride contained in the eluent react with sodium hydrochloride to produce sodium metaaluminate/sodium metagallate and ferric chloride precipitates in form of ferric hydroxide. The reaction product is subjected to a solid-liquid separation and rinse to yield gallium-containing sodium metaaluminate solution. Preferably, the concentration of sodium hydroxide solution used in step c) is 180-240 g/l.

In step d) according to an embodiment of the invention, an appropriate amount of carbon dioxide may be fed into the gallium-containing sodium metaaluminate solution, so as to conduct the carbonation once or several times, till the mass ratio between gallium and alumina is more than 1:340 in the obtained gallium-aluminum double salt. Particularly, the carbonation(s) may comprise the following steps.

Primary carbonation: carbon dioxide is introduced with a flow rate of 80-160 ml/min into the gallium-containing sodium metaaluminate mother solution for a smooth carbonation, in which the reaction temperature is controlled to 40-90°C, the carbonation time is 4-10h, the pH value at the reaction end is 10.6-9.7. After the reaction, most aluminum is precipitated in form of aluminum hydroxide, whereas gallium is retained in the solution. The precipitate is removed from the solution, so as to separate gallium and most aluminum for the first time;

Secondary carbonation: to the solution obtained from the primary carbonation separating the aluminum hydroxide precipitates, carbon dioxide is further introduced with a flow rate of 100-160 ml/min for additional carbonation reaction, in which the reaction temperature is controlled to 30-60°C, the carbonation time is 3-7 h, the pH value at the reaction end is 9.8-9.0, so as to precipitate all aluminum and most gallium. The precipitate is separated by filtration to obtain a gallium-aluminum double salt. The filtrate is concentrated by vaporization, and then sodium carbonate is crystallized out of the solution. After removing the crystallized sodium carbonate, the solution containing a small amount of gallium is recycled to the solution obtained from the primary carbonation at the beginning of the secondary carbonation.

If the mass ratio of gallium and alumina in the gallium-aluminum double salt obtained through the primary carbonation and the secondary carbonation is equal to or less than 1:340, such double salt can be dissolved in sodium hydroxide solution or sodium metaaluminate mother solution to conduct the primary carbonation and the secondary carbonation again till the mass ratio of gallium and alumina in the gallium-aluminum double salt is more than 1:340. The gallium content is measures in accordance with the method of Standard of the People's Republic of China GB/T 20127.5-2006 "Steel and Alloy- Determination of Trace Elements Contents Part V: Determination of Gallium Content by Extraction Separation-Rhodamine B Photometric Method". The aluminum hydroxide content is calculated by 100% minus the measured gallium hydroxide content, which is then calculated to the alumina content. In the present invention, the aluminum hydroxide and sodium carbonate obtained from the steps for enriching and separating gallium can be recycled as by-product.

In step e) according to an embodiment of the invention, the gallium-aluminum double salt obtained from the secondary carbonation is added into a sodium hydroxide solution to prepare the base solution containing gallium and aluminum. Preferably, the concentration of the sodium hydroxide solution is 180-245g/l. Both gallium content and sodium hydroxide content in the base solution are adjusted to 1 mol/l or more by adjusting the alkalinity and/or concentrating. Then, the base solution is electrolyzed with platinum electrodes used as the negative and positive electrodes, electrolysis current of 180-200 mA/l, electrolysis voltage of 4V and electrolytic bath temperature of 35-45°C, so as to obtain the metal gallium product.

Preferably, the reaction temperature of the gallium-aluminum double salt precipitate and the sodium hydroxide solution is 20-100°C.

In the present invention, the sodium salts contained in the electrolyzed solution with a high content can be recycled by evaporation and the evaporated water can be re-used.

As compared with processes in the prior art, the method according to the present invention is simple, the extraction efficiency of gallium is high, the production coast is low, and the product quality is steady. The circulating fluidized-bed fly ash with high activity is adopted as the raw material for the invention and gallium is extracted from the fly ash via direct acid-leaching process, which saves the step of calcination and activation with presence of sodium carbonate at a very high temperature and thus simplifies the procedures and reduces the production cost. The acid leaching of the fly ash occurs in acid-resistant reactor at a moderate temperature (in the range of 100-200°C), and thus the leaching efficiency of gallium is high, being 80% or more. The effective adsorption efficiency of gallium in hydrochloric leachate is 96% or more when lower-cost macro-porous cationic resin is used for adsorbing gallium. During enriching gallium in the hydrochloric leachate by the macro-porous cationic resin, iron in the hydrochloric leachate is also effectively removed, so as to obtain a refined aluminum chloride solution with low iron content which can be used for preparing aluminum chloride crystal and metallurgical-grade alumina with low iron content.

In addition, the experimental study has indicated that, since the magnetic separation apparatus according to the present invention is used, the iron removing efficiency is improved by 20% or more, and the iron removing rate is improved from 60% to 80%, which significantly relieves the burden of de-ironing from solution in the subsequent processes, and thereby reducing the production cost and improving the production efficiency.

### Brief Description of the drawings

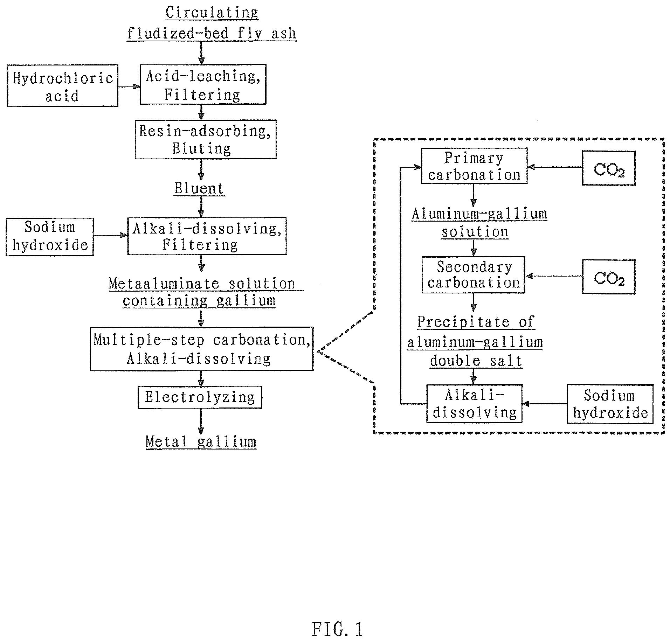

Figure 1 is a flow diagram of the method according to the present invention;

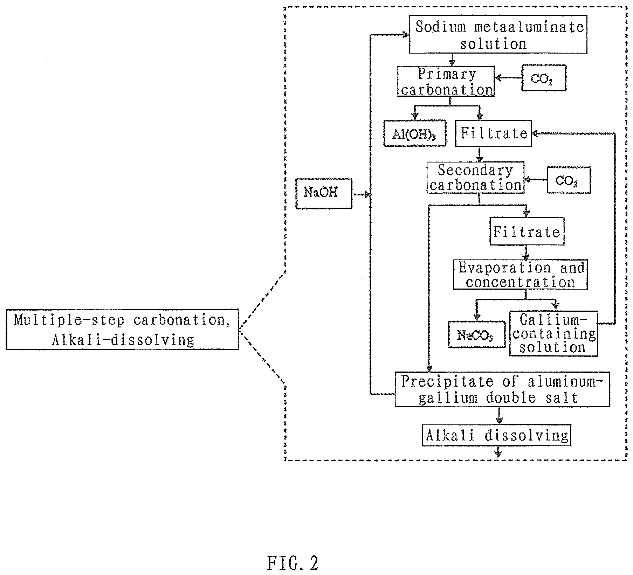

Figure 2 is a flow diagram of the multiple-stage carbonation process according to the present invention;
Figure 3 is a schematic diagram of the vertical ring magnetic separator used in one preferred embodiment of the invention.

### Detailed Description of the Invention

Hereafter the method according to the present invention will be further described in detail with reference to the drawings, however, it should be understood that the present invention is not limited thereto in any way.

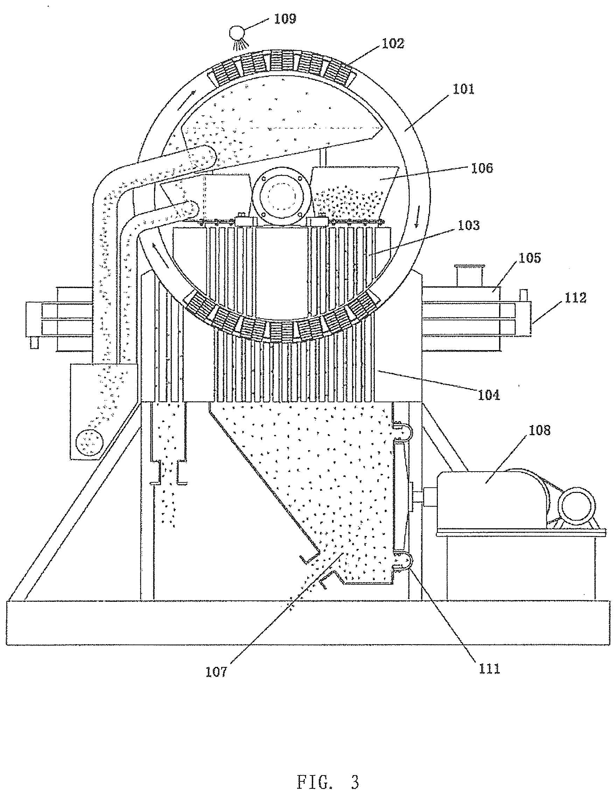

The structure of vertical ring magnetic separator used for the following Examples is shown in Figure 3. The vertical ring magnetic separator comprises a rotating ring 101, an inductive medium 102, an upper iron yoke 103, a lower iron yoke 104, a magnetic exciting coil 105, a feeding opening 106 and a tailing bucket 107, and also comprises a pulsating mechanism 108 and a water washing device 109.

The rotating ring 101 is a circular ring shaped carrier in which the inductive medium 102 is carried. When the rotating ring 101 is rotated, the inductive medium 102 and the matters adsorbed thereon move together, so as to separate the adsorbed matters. The rotating ring 101 may be made of any suitable material, such as carbon steel etc.

An electric motor or other driving device can provide power to the rotating ring 101 such that the rotating ring 101 can rotate in a set speed.

When parameters, such as iron content or treating amount of the material to be treated is lower than a predetermined value, a relatively low rotating speed, such as 3 rpm, may be used, in order to make the ferromagnetic impurities having sufficient time to be adsorbed onto the inductive medium meshes under the act of magnetic field, and being separated.

The inductive medium 102 is arranged in the rotating ring 101. The magnetic field generated by the magnetic exciting coil 105 makes the upper iron yoke 103 and the lower iron yoke 104 to be a pair of magnetic poles generating magnetic field along the vertical direction. The upper iron yoke 103 and the lower iron yoke 104 are arranged at the inner and outer sides of the lower portion of the rotating ring 101 such that the rotating ring 101 rotates vertically between the magnetic poles. When the rotating ring 101 rotates, the inductive medium 102 in the rotating ring 101 will pass the pair of magnetic poles made up of the upper iron yoke 103 and the lower iron yoke 104 and be magnetized for removing the iron.

The inductive medium 102 may be layers of steel plate meshes. The steel plate meshes are made of 1Cr17. Each layer of steel plate meshes is woven by wires, with the mesh grid having a rhomb shape. The edges of the wires have prismatic sharp angles. The upper iron yoke 103 is communicated with the feeding opening 106 and the lower iron yoke 104 is communicated with the tailing bucket 107 which is used for discharging materials. The steel plate meshes have a medium layer spacing of 3 mm. The magnetic exciting coil 105 is formed of flat wire solenoid coil which is double glass envelope enamelled aluminum and is solid conductor. The current passing through the magnetic exciting coil 105 is continuously adjustable, and thus the strength of the magnetic field generated by the magnetic exciting coil 105 is also continuously adjustable.

The vertical ring magnetic separator further comprises a pulsating mechanism 108 coupled with the tailing bucket 107 via a rubber plate 111. The pulsating mechanism can be achieved by an eccentric link mechanism, such that the alternating force generated by the pulsating mechanism 108 pushes the rubber plate 111 to move forth and back, it is possible for the mineral slurry in the tailing bucket 107 to generate pulsations.

The water washing device 109 is arranged above the rotating ring 101, for flushing the magnetic particles into the concentrate hopper by water flow. The water washing device 109 may be various suitable flushing or spraying device, such as a spraying nozzle, water pipe, etc.

The feeding opening 106 is communicated with a side of the upper iron yoke 103, such that the fly ash can pass through the rotating ring. The feeding opening 106 may be a feeding hopper or a feeding pipe. The feeding opening 106 is configured for feeding the mineral slurry, such that the mineral slurry enters the upper iron yoke 103 with a relatively small fall for preventing the magnetic particles from penetrating the inductive medium 102 due to gravity, thus improving the effect of magnetically separating and impurities removing.

The vertical ring magnetic separator further comprises a cooling device 112, which is provided adjacent to the magnetic exciting coil for decreasing the working temperature of the magnetic exciting coil. The cooling device is a pressure balance chamber water jacket. The pressure balance chamber water jacket is made of stainless steel material, and thus is not prone to scale. As pressure balance chambers are respectively mounted to the inlet and outlet of the water jacket, they ensure that the water flows uniformly through each layer of water jacket and fills throughout the inside of the jacket, thus preventing any local water from taking a shortcut which otherwise would affect heat dissipation. Each layer of water jacket has a water passage with a large cross-section area, and thus it is possible to completely avoid blocking due to scaling. Even if there is a block somewhere, the normal flowing of the circulating water in the water jacket will not be affected. Moreover, the water jacket is in close contact with the coil by a large contacting area, thus most heat generated by the coil can be taken away by the water flow.

The pressure balance chamber water jacket, as compared with the common hollow copper tube for heat dissipation, shows high heat dissipation efficiency, small temperature rise of the windings, and low exciting power. In case of a rated exciting current of 40A, the magnetic separator with the pressure balance chamber water jacket for heat dissipation can be reduced from 35 kW to 21 kW.

When the magnetic separator apparatus is working, the fed mineral slurry flows along a slot of the upper iron yoke 103 then through the rotating ring 101. As the inductive medium 102 in the rotating ring 101 is magnetized in the background magnetic field, a magnetic field with very high magnetic induction strength (such as 2.2 T ( 22,000 G)) is formed at the surface of the inductive medium 102. The magnetic particles in the mineral slurry, under the effect of the very high magnetic field, are adhered to the surface of the inductive medium 102, and rotated with the rotating ring 101 going into the region without magnetic field at top of the rotating ring 101. Then, the magnetic particles are flushed into the concentrate hopper by the water washing device 109 located above the top of the rotating ring. The non-magnetic particles flow along the slots of the lower iron yoke 104 into the tailing bucket 107 and then are discharged via a tailing exit of the tailing bucket 107.

Hereafter the method according to the present invention will be further described in detail with reference to the Examples, however, it should be understood that the present invention is not limited thereto in any way.

In the following Examples, the circulating fluidized-bed fly ash discharged by a thermal power plant is used as the raw material and its chemical components are shown in Table 1. The gallium content in the fly ash is 0.0042wt%.

**Table 1 Chemical components of circulating fluidized-bed fly ash (wt%)**

| SiO₂ | Al₂O₃ | TiO₂ | CaO | MgO | TFe₂O₃ | FeO | K₂O | Na₂O | LOS | SO₃ | Total |
|---|---|---|---|---|---|---|---|---|---|---|---|
| 34.70 | 46.28 | 1.48 | 3.61 | 0.21 | 1.54 | 0.22 | 0.39 | 0.17 | 7.17 | 1.32 | 95.77 |

### Example 1

The experimental procedures used in the example are as follows.
(1) Crushing the circulating fluidized-bed fly ash to a size of 200 mesh, removing iron by wet magnetic separation using the vertical magnetic separator as illustrated in Fig.3, such that the ferric oxide content in the fly ash was reduced to 0.8wt%; putting the filtered cake of the fly ash obtained after magnetic separation into an acid-resistant reactor and adding industrial hydrochloride acid having a concentration of 37wt% therein to perform acid dissolving reaction, wherein the molar ratio of HCl contained in the hydrochloride acid to alumina contained in the fly ash was 4.5:1, the reaction temperature was 200°C, the reaction pressure was 2.1 MPa and the reaction time was 1 hour; and then pressure-filtering the discharged reaction product by means of plate-and-frame filter press and washing to yield a hydrochloric leachate having pH of 1.7, wherein the leaching efficiency of gallium from the fly ash was measured to be 84.2%.
(2) Cooling the hydrochloric leachate till its temperature was 65°C by means of heat-exchange, then pumping the hydrochloric leachate through corrosion-resistant pump into resin column (single-column and loaded with D001 Resin (Anhui Wandong Chemical Plant))to enrich gallium, wherein the flow flux of the hydrochloric leachate was 2 times over resin volume per hour; and when the adsorption reached saturation, eluting the resin column with 4wt% hydrochloride acid as eluting agent at 25°C to obtain gallium-rich eluent, wherein the flow flux of the hydrochloride acid was 2 times over resin volume per hour, and the total amount of the eluting agent used for elution was 2 times over the volume of the resin; and regenerating the resin with 4wt% hydrochloride acid, wherein the adsorption efficiency of gallium in the acid leachate was measured to be 96.4%.
(3) Adding 180 g/l sodium hydroxide solution into the eluent, so that the mass ratio of alumina to sodium hydroxide in the solution was 1.0, and keeping reacting at 20°C, subjecting the reaction product to filtration to remove ferric hydroxide precipitate to obtain a gallium-containing sodium metaaluminate solution.
(4) Introducing carbon dioxide gas with a flow rate of 80 ml/min into 100 ml of the gallium-containing sodium metaaluminate mother solution obtained from step (3) at 65°C, the pH value at the end of reaction was 10.5, then filtering the resultant to finish the primary carbonation; subjecting the filtrate obtained from the primary carbonation to the secondary carbonation: further introducing carbon dioxide gas with a flow rate of 100 ml/min at 60°C, the pH value at the end of the reaction was 9.8, then filtering the resultant to obtain a gallium-aluminum double salt precipitate. The mass ratio of gallium to alumina in the double salt was 1/330. The gallium content was measured in accordance with the method of Standard of the People's Republic of China GB/T 20127.5-2006 "Steel and Alloy- Determination of Trace Element Contents Part V: Determination of Gallium Content by Extraction Separation-Rhodamine B Photometric Method". The aluminum hydroxide content was 100% minus gallium hydroxide content, and thereby the alumina content was calculated.
(5) Adding the aluminum-gallium double salt obtained from step (4) into a sodium hydroxide solution of 180g/l and keeping the reaction at 25°C to obtain a base solution rich of gallium, then adjusting the gallium content to 1.5 mol/l and electrolyzing with platinum electrodes as the negative and positive electrodes, the electrolysis current of 200mA/l, electrolysis voltage of 4V and electrolytic bath temperature of 40°C to obtain metal gallium product. The gallium content in the product was measured to be 99.9% according to the method of "YS/T520-2007 Methods for Chemical Analysis of Gallium".

### Example 2

The operation conditions were the same as those of Example 1 except step (1). Step (1) was adjusted as follows:
Crushing the circulating fluidized-bed fly ash to a size of 150 mesh, removing iron by wet magnetic separation using the vertical magnetic separator as illustrated in Fig.3, such that the ferric oxide content in the fly ash was reduced to 0.8wt%; putting the filtered cake of the fly ash obtained after magnetic separation into an acid-resistant reactor and adding industrial hydrochloride acid having a concentration of 28wt% therein to perform acid dissolving reaction, wherein the molar ratio of HCl contained in the hydrochloride acid to alumina contained in the fly ash was 5:1, the reaction temperature was 150°C, the reaction pressure was 1.0 MPa and the reaction time was 2 hours; and then pressure-filtering the discharged reaction product by means of plate-and-frame filter press and washing to yield a hydrochloric leachate having pH of 1.5, wherein the leaching efficiency of gallium from the fly ash was measured to be 82.8%.

The gallium content in the obtained product was measured to be 99.9%.

### Example 3

The operation conditions were the same as those of Example 1 except step (1). Step (1) was adjusted as follows:
Crushing the circulating fluidized-bed fly ash to a size of 200 mesh, removing iron by wet magnetic separation using the vertical magnetic separator as illustrated in Fig.3, such that the ferric oxide content in the fly ash was reduced to 0.8wt%; putting the filtered cake of the fly ash obtained after magnetic separation into an acid-resistant reactor and adding industrial hydrochloride acid having a concentration of 20wt% therein to perform acid dissolving reaction, wherein the molar ratio of HCl contained in the hydrochloride acid to alumina contained in the fly ash was 8:1, the reaction temperature was 100°C, the reaction pressure was 0.1 MPa and the reaction time was 4 h; and then pressure-filtering the discharged reaction product by means of plate-and-frame filter press and washing to yield a hydrochloric leachate having pH of 1.4, wherein the leaching efficiency of gallium from the fly ash was measured to be 80.1%.

The gallium content in the obtained product was measured to be 99.9%.

### Example 4

The operation conditions were the same as those of Example 1 except step (2). Step (2) was adjusted as follows:
Cooling the hydrochloric leachate till its temperature was 90°C by means of heat-exchange, then pumping the hydrochloric leachate through corrosion-resistant pump into the resin columns (two columns in series and loaded with JK008 Resin (Anhui Wandong Chemical Plant)) to enrich gallium, wherein the flow flux of the hydrochloric leachate was 4 times over resin volume per hour; and when the adsorption reached saturation, eluting the resin column with 2wt% hydrochloride acid as eluting agent at 60°C to obtain gallium-rich eluent, wherein the flow flux of the hydrochloride acid was 1 time over resin volume per hour, and the total amount of the eluting agent used for elution was 2 times over the volume of the resin and 4wt% hydrochloride acid was used for the regeneration of the resin, wherein the adsorption efficiency of gallium in the acid leachate was measured to be 96.9%.

The gallium content in the obtained product was measured to be 99.9%.

### Example 5

The operation conditions were the same as those of Example 1 except step (2). Step (2) was adjusted as follows:
Cooling the hydrochloric leachate till its temperature was 70°C by means of heat-exchange, then pumping the hydrochloric leachate through corrosion-resistant pump into the resin columns (two columns in series and loaded with 732 Resin (Anhui Sanxing Resin Ltd., Co)) to enrich gallium, wherein the flow flux of the hydrochloric leachate was 1 time over resin volume per hour; and when the adsorption reached saturation, eluting the resin column with water as eluting agent at 60°C to obtain gallium-rich eluent, wherein the flow flux of the water was 1 time over resin volume per hour, and the total amount of the eluting agent used for elution was 3 times over the volume of the resin and the adsorption efficiency of gallium in the acid leachate was measured to be 96.2%.

The gallium content in the obtained product was measured to be 99.9%.

### Example 6

The operation conditions were the same as those of Example 1 except step (2). Step (2) was adjusted as follows:
Cooling the hydrochloric leachate till its temperature was 40°C by means of heat-exchange, then pumping the hydrochloric leachate through corrosion-resistant pump into the resin column (single-column form and loaded with SPC-1 Resin (Shanghai Resin Plant)) to enrich gallium, wherein the flow flux of the hydrochloric leachate was 1 time over resin volume per hour; and when the adsorption reached saturation, eluting the resin column with 10wt% hydrochloride acid as eluting agent at 30°C to obtain gallium-rich eluent, wherein the flow flux of the hydrochloride acid was 3 times over resin volume per hour, and the total amount of the eluting agent used for elution was 1 time over the volume of the resin and the adsorption efficiency of gallium in the acid leachate was measured to be 96.5%.

The gallium content in the obtained product was measured to be 99.9%.

### Example 7

The operation conditions were the same as those of Example 1 except step (3). Step (3) was adjusted as follows:
Adding 240 g/l sodium hydroxide solution into the eluent, so that the mass ratio of alumina to sodium hydroxide in the solution was 2, and keeping reacting at 90°C, subjecting the reaction product to filtration to remove ferric hydroxide precipitate to obtain a gallium-containing sodium metaaluminate solution.

The gallium content in the obtained product was measured to be 99.9%.

### Example 8

The operation conditions were the same as those of Example 1 except step (4). Step (4) was adjusted as follows:
Introducing carbon dioxide gas with a flow rate of 160 ml/min into 100 ml of the gallium-containing sodium metaaluminate mother solution obtained from step (3) at 90°C, the pH was controlled to 9.8, then filtering the resultant to finish the primary carbonation; subjecting the filtrate obtained from the primary carbonation to the secondary carbonation: further introducing carbon dioxide gas with a flow rate of 150 ml/min at 60°C, the pH was controlled to 9.0, then filtering the resultant to obtain gallium-aluminum double salt precipitate. The double salt was dissolved in the sodium metaaluminate mother solution, and under the same conditions, the above primary and secondary carbonations were repeated to obtain gallium-aluminum double salt precipitate again. The mass ratio of gallium to alumina in the latest double salt was measured to be 1/290.

The gallium content in the obtained product was measured to be 99.9%.

### Example 9

The operation conditions were the same as those of Example 8 except step (4). In step (4), after the twice carbonations as described in Example 8, under the same conditions, the carbonation was repeated for the third time to obtain a gallium-aluminum double salt precipitate. The mass ratio of gallium to alumina in the double salt was measured to be 1/120.

The gallium content in the obtained product was measured to be 99.9%.

### Example 10

The operation conditions were the same as those of Example 8 except step (5). Step (5) was adjusted as follows:
Adding the gallium-aluminum double salt obtained from step (4) into a sodium hydroxide solution with a concentration of 240g/l, and keeping reacting at 25°C to obtain a base solution rich of gallium, then adjusting the gallium content to 1.1 mol/l and electrolyzing the base solution to obtain metal gallium product.

The gallium content in the obtained product was measured to be 99.9%.

## Claims

1. A method for extracting gallium from fly ash, comprising the following steps:
a) crushing the fly ash to a particle size of passing through a sieve with the sieve opening size of 150 µ m (100 mesh), removing iron by wet magnetic separation, such that the ferric oxides content in the fly ash is reduced to 1.0wt% or less, then adding hydrochloride acid into the de-ironed fly ash to perform an acid-leaching reaction, and subjecting the reaction product to solid-liquid separation to yield a hydrochloric leachate having a pH value in the range of 1-3;
b) adsorbing gallium in the hydrochloric leachate by passing the same through a column loading with a macro-porous cationic resin; eluting the column with water or hydrochloride acid as an eluting agent when the adsorption reaches saturation to obtain a gallium-containing eluent;
c) adding sodium hydroxide solution into the gallium-containing eluent to react, separating precipitates after reaction by filtration to obtain a gallium-containing sodium metaaluminate solution;
d) subjecting the gallium-containing sodium metaaluminate solution to carbonation by introducing carbon dioxide therein, and then separating gallium from most aluminum to obtain a gallium-aluminum double salt with the mass ratio of gallium to alumina being more than 1:340; and
e) adding the gallium-aluminum double salt into a sodium hydroxide solution, subjecting the reactant to evaporation and concentration to obtain a base solution containing gallium and aluminum with the contents of gallium and alumina being 1mol/l or more respectively, and then electrolyzing the base solution to obtain metal gallium.

2. The method according to claim 1, wherein, in step a), the concentration of the hydrochloride acid is 20-37wt%; and the molar ration of HCl contained in the hydrochloride acid to alumina contained in the fly ash is 4:1-9:1; preferably, in the acid-leaching reaction of step a), the reaction temperature is 100-200°C, the reaction pressure is 0.1-2.5 MPa, and the reaction time is 0.5-4.0 hours.

3. The method according to claim 1, wherein, in step b), the macro-porous cationic resin is strong-acid cationic resin and preferably selected from styrene resins or acrylic resins; further preferably, the essential performances of the resin include moisture content of 50.0-70.0%, exchange capacity of more 3.60 mmol/g or more, volume exchange capacity of 1.20 mmol/g or more, bulk density in wet state of 0.60-0.80 g/ml, particle size of 0.315-1.250mm, effective particle size of 0.400-0.700mm and maximum working temperature of 95°C; and
in step b), adsorbing gallium in the hydrochloric leachate by passing the hydrochloric leachate through the column from the bottom to top with a volume flux of 1-4 times over resin volume per hour at 20-90 °C; preferably, eluting said macro-porous cationic resin with 2-10wt% hydrochloride acid as an eluting agent, and more preferably, the eluting temperature is 20-60°C, the amount of the eluting agent used is 1-3 times over the volume of the resin, and the eluting rate is 1-3 times over resin volume per hour.

4. The method according to claim 1, wherein, in step c), the concentration of sodium hydroxide solution is 180-240 g/l; preferably, the reaction temperature is 20-100 °C;

5. The method according to claim 1, wherein, in step d), the carbonation by introducing carbon dioxide into the gallium-containing sodium metaaluminate solution comprises the steps of:
performing a primary carbonation: introducing carbon dioxide into the gallium-containing sodium metaaluminate mother solution obtained in step c), in which the flow rate of carbon dioxide is in the range of 80-160 ml/min, the reaction temperature is controlled in the range of 40-90°C, the carbonation time is in the range of 4-10h, the pH value at the end of the reaction is in the range of 10.6-9.7, then separating the precipitates from the solution by filtration, so as to separate gallium from aluminum for the first time;
performing a secondary carbonation: further introducing carbon dioxide into the solution obtain from the primary carbonation after the separation of the aluminum hydroxide precipitates, in which the flow rate of carbon dioxide is in the range of 100-160 ml/min the reaction temperature is controlled in the range of 30-60°C, the carbonation time is in the range of 3-7h, the pH value at the end of the reaction is in the range of 9.8-9.0, so as to precipitate all aluminum in form of aluminum hydroxide and most gallium; subjecting the reactant to filtration to obtain gallium-aluminum double salt; then crystallizing sodium carbonate in the filtrate obtained from the filtration by evaporization and concentration and separating the crystallized sodium carbonate from the solution; and then recycling the filtrate containing a small amount of gallium obtained after the separation of sodium carbonate to the beginning of the secondary carbonation for further carbonation.

6. The method according to claim 5, wherein, in step d), when the mass ratio of gallium to alumina in the gallium-aluminum double salt obtained after the primary carbonation and secondary carbonation is equal to or less than 1:340, dissolving the double salt in a sodium hydroxide solution or the sodium metaaluminate mother solution and repeating the primary carbonation and the secondary carbonation until the mass ratio of gallium to alumina in the last gallium-aluminum double salt is more than 1:340.

7. The method according to claim 1, wherein, in step e), the concentration of sodium hydroxide solution is 180-245 g/l; preferably, the reaction temperature in step e) is 20-100 °C.

8. The method according to claim 1, wherein, in step e), when the base solution containing aluminum and gallium is electrolyzed, platinum electrodes are used as the negative and positive electrodes, electrolysis current is in the range of 180-200 mA/l, electrolysis voltage is in the range of 4V and electrolytic bath temperature is in the range of 35-45°C.

9. The method according to any one of claims 1-8, wherein, in step a), the apparatus used for de-ironing by wet magnetic separation is a vertical ring magnetic separator which comprises a rotating ring, an inductive medium, an upper iron yoke, a lower iron yoke, a magnetic exciting coil, a feeding opening, a tailing bucket and a water washing device, wherein the feeding opening is used for feeding the coal ash to be de-ironed, the tailing bucket is used for discharging the non-magnetic particles after de-ironing, the upper iron yoke and the lower iron yoke are respectively arranged at the inner and outer sides of the lower portion of the rotating ring, the water washing device is arranged above the rotating ring, the inductive medium is arranged in the rotating ring, the magnetic exciting coil is arranged at the periphery of the upper iron yoke and the lower iron yoke so as to make the upper iron yoke and the lower iron yoke to be a pair of magnetic poles for generating a magnetic field in the vertical direction, and wherein the inductive medium is layers of steel plate meshes, each steel plate mesh is woven by wires, and the edges of the wires have prismatic sharp angles.

10. The method according to claim 9, wherein the upper iron yoke and the lower iron yoke are formed integrally, and are arranged, in a plane perpendicular to the rotating ring, to surround the inner and outer sides of the lower portion of the rotating ring; and
the vertical ring magnetic separator further comprises a pressure balance chamber water jacket disposed adjacent to the magnetic exciting coil.

11. The method according to claim 10, wherein the steel plate mesh has a medium layer spacing of 2-5 mm, preferably 3 mm; and the steel plate mesh is made of 1Cr17; preferably, the steel plate mesh has a thickness of 0.8-1.5 mm, a mesh grid size of 3mm × 8 mm - 8mm × 15mm, and a wire width of 1-2 mm, more preferably, the steel plate mesh has a thickness of 1 mm, a mesh grid size of 5mm × 10mm, and a wire width of 1.6mm.

12. The method according to claim 11, wherein the vertical ring magnetic separator further comprises a pulsating mechanism, which is coupled with the tailing bucket via a rubber plate.

13. The method according to claim 12, wherein the inductive medium is provided in the entire circle of the rotating ring.

14. The method according to claim 13, wherein the magnetic exciting coil is a flat wire solenoid coil which is double glass envelope enamelled aluminum.

15. The method according to claim 14, wherein the magnetic field strength of the vertical ring magnetic separator is 15,000 Gs or more, preferably 15,000-20,000 Gs, further preferably15,000-17,500 Gs.

## Patentansprüche

1. Verfahren zur Extraktion von Gallium aus Flugasche, umfassend die folgenden Schritte:
a) Brechen der Flugasche auf eine Teilchengröße die durch ein Sieb passt, wobei das Sieb Öffnungen in der Größe von 150 µm (100 Mesh) hat, wobei Eisen durch Nassmagnetabscheidung entfernt wird, sodass der Eisenoxidgehalt in der Flugasche auf 1,0 Gew.-% oder weniger reduziert wird, anschließendes Hinzufügen von Hydrochloridsäure in die enteisente Flugasche um eine Säureauslaugungsreaktion durchzuführen, und Unterziehen des Reaktionsprodukts einer Fest-Flüssig-Trennung um ein salzsaures Eluat zu erhalten, das einen pH-Wert im Bereich von 1-3 hat;
b) Adsorbieren von Gallium in dem salzsauren Eluat, indem selbiges durch eine mit einem makroporösen kationischen Harz beladene Säule geleitet wird; Eluieren der Säule mit Wasser oder einer Hydrochloridsäure als Elutionsmittel, wenn die Adsorption eine Sättigung erreicht, bei der ein galliumhaltiges Elutionsmittel erhalten wird;
c) Hinzufügen einer Natronlauge in das galliumhaltige Elutionsmittel zur Reaktion, Abtrennung von Ablagerungen nach der Reaktion durch Filterung, um eine galliumhaltige Natrium-Metaaluminat-Lösung zu erhalten;
d) Unterziehen der galliumhaltigen Natrium-Metaaluminat-Lösung einer Karbonatisierung, indem Kohlenstoffdioxid zugesetzt wird, und anschließendes Trennen von Gallium vom Großteil des Aluminiums, um ein Gallium-Aluminium-Doppelsalz mit einem Massenverhältnis von Gallium zu Aluminiumoxid von mehr als 1:340 zu erhalten; und
e) Hinzufügen des Gallium-Aluminium-Doppelsalzes in eine Natronlauge, Unterziehen des Reaktionsmittels einer Evaporation und Konzentration, um eine Grundlösung zu erhalten, die Gallium und Aluminium enthält, wobei der Gehalt von Gallium und Aluminium mehr als 1mol/l oder jeweils mehr enthält, und anschließendes Elektrolysieren der Grundlösung, um Metallgallium zu erhalten.

2. Verfahren nach Anspruch 1, wobei in Schritt a) die Hydrochloridsäure -Konzentration 20-37 Gew.-% beträgt; und das molare Verhältnis von HCl, das in der Hydrochloridsäure enthalten ist, zum Aluminiumoxid, das in der Flugasche enthalten ist, 4:1 - 9:1 ist; vorzugsweise beträgt die Reaktionstemperatur in der Säureauslaugungsreaktion aus Schritt a) 100-200°C, der Reaktionsdruck beträgt 0,1-2,5 MPa und die Reaktionszeit ist 0,5-4,0 Stunden.

3. Verfahren nach Anspruch 1, wobei in Schritt b) das makroporöse kationische Harz hochsaures kationisches Harz ist und vorzugsweise ausgewählt ist aus Styrolharzen oder Acrylharzen; und weiter bevorzugt die wesentlichen Leistungen des Harzes einen Feuchtigkeitsgehalt von 50,0 - 70,0%, eine Wechselkapazität von mehr als 3,60 mmol/g oder mehr, eine Volumenaustauschkapazität von 1,20 mmol/g oder mehr, eine Rohdichte im Nasszustand von 0,60 - 0,80 g/ml, eine Teilchengröße von 0,315-1,250 mm, eine effektive Teilchengröße von 0,400 - 0,700 mm und eine maximale Arbeitstemperatur von 95°C einschließen; und
Adsorbieren des Galliums in dem salzsauren Eluat in Schritt b), indem das salzsaure Eluat durch die Säule von unten nach oben, mit einem Volumenstrom von 1-4 Mal mehr als dem Harzvolumen pro Stunde bei 20-90°C geleitet wird; vorzugsweise Eluieren des makroporösen kationischen Harzes mit 2-10 Gew.-% Hydrochloridsäure als Elutionsmittel, und bevorzugter liegt die Elutionstemperatur bei 20-60°C, die Menge des verwendeten Elutionsmittels ist 1-3 Mal mehr als das Harzvolumen und die Elutionsrate ist 1-3 Mal mehr als das Harzvolumen pro Stunde.

4. Verfahren nach Anspruch 1, wobei in Schritt c) die Konzentration der Natronlauge 180-240 g/l ist; vorzugsweise beträgt die Reaktionstemperatur 20-100°C.

5. Verfahren nach Anspruch 1, wobei in Schritt d) die Karbonisierung durch Einführung von Kohlenstoffdioxid in die galliumhaltige Natrium-Metaaluminat-Lösung die folgenden Schritte umfasst:
Durchführen einer ersten Karbonisierung: Einführung des Kohlenstoffdioxids in die galliumhaltige Natrium-Metaaluminat-Stammlösung, die in Schritt c) erhalten wird, in welchem die Flussrate von Kohlenstoffdioxid im Bereich von 80-160 ml/min ist, die Reaktionstemperatur im Bereich von 40-90°C kontrolliert wird, die Karbonisierungszeit im Bereich von 4-10 Stunden liegt, der pH-Wert am Ende der Reaktion im Bereich von 10,6-9,7 liegt, die Ablagerungen anschließend von der Lösung mittels Filterung abgetrennt werden, um Gallium von Aluminium zum ersten Mal zu trennen;
Durchführen einer zweiten Karbonisierung: weitere Einführung von Kohlenstoffdioxid in die Lösung, welche durch die erste Karbonisierung nach Abtrennung der Aluminiumhydroxidablagerungen erhalten wurde, in welcher sich die Flussrate von Kohlenstoffdioxid im Bereich von 100-160 ml/min bewegt, die Reaktionstemperatur sich kontrolliert im Bereich von 30-60°C bewegt, die Karbonisierungszeit im Bereich von 3-7 Stunden liegt, der pH-Wert am Ende der Reaktion im Bereich von 9,8-9,0 liegt, um das gesamte Aluminium in Form von Aluminiumhydroxid und hauptsächlich Gallium abzulagern; das Reaktionsmittel wird einer Filtration unterzogen, um Gallium-Aluminium-Doppelsalz zu erhalten; anschließende Kristallisation von Natriumkarbonat in dem Filtrat, welches durch die Filtration erhalten wurde, durch Evaporation und Konzentration und Abtrennung des kristallisierten Natriumkarbonats von der Lösung; und dann Recyclen des Filtrats, welches eine kleine Menge Gallium enthält, die nach der Abtrennung des Natriumkarbonats zu Beginn der zweiten Karbonisierung für eine weitere Karbonisierung erhalten wurde.

6. Verfahren nach Anspruch 5, wobei in Schritt d), wenn das Massenverhältnis von Gallium zu Aluminiumoxid in dem Gallium-Aluminium-Doppelsalz, welches nach der ersten Karbonisierung und der zweiten Karbonisierung erhalten wurde, gleich oder weniger als 1:340 ist, das Doppelsalz in einer Natronlauge oder der Natrium-Metaaluminat-Stammlösung aufgelöst wird und die erste Karbonisierung und die zweite Karbonisierung wiederholt wird, bis das Massenverhältnis von Gallium zum Aluminiumoxid im letzten Gallium-Aluminium-Doppelsalz mehr als 1:340 ist.

7. Verfahren nach Anspruch 1, wobei in Schritt e); die Konzentration der Natronlauge 180-245 g/l ist; vorzugsweise die Reaktionstemperatur in Schritt e) 20-100°C beträgt.

8. Verfahren nach Anspruch 1, wobei in Schritt e), wenn die aluminiumhaltige und galliumhaltige Basislösung elektrolysiert wird, Platinelektroden als negative und positive Elektroden verwendet werden, der Elektrolysestrom im Bereich von 180-220 mA/l liegt, die Elektrolysespannung im Bereich von 4V ist und die Temperatur des Elektrolysebads im Bereich von 35-45°C liegt.

9. Verfahren nach einem der Ansprüche 1-8, wobei in Schritt a) der Apparat, der zur Eisenentfernung durch Nassmagnetabscheidung verwendet wird, ein vertikaler Ringmagnetseparator ist, welcher einen Rotationsring, ein induktives Medium, ein oberes Eisenjoch, ein unteres Eisenjoch, eine magnetische Erregerspule, eine Zuführöffnung, einen Resteeimer und ein Wasserwaschgerät umfasst, wobei die Zuführöffnung zur Zuführung der zu enteisenten Kohlenasche verwendet wird, der Resteeimer zur Abladung der nicht-magnetischen Teilchen nach der Eisenentfernung verwendet wird, das obere Eisenjoch und das untere Eisenjoch jeweils an inneren und äußeren Seiten des unteren Abschnitts des Rotationsrings angeordnet sind, das Wasserwaschgerät oberhalb des Rotationsrings angeordnet ist, das induktive Medium im Rotationsring angeordnet ist, die magnetische Erregerspule an der Umlaufbahn des oberen Eisenjochs und des unteren Eisenjochs angeordnet ist, sodass das obere Eisenjoch und das untere Eisenjoch zu einem Paar magnetischer Pole wird, um ein magnetisches Feld in der vertikalen Richtung zu erzeugen, und wobei das induktive Medium Schichten aus Stahlplattennetzen ist, wobei jedes Stahlplattennetz aus Drähten gewoben ist, und die Kanten der Drähte prismaförmige Winkel haben.

10. Verfahren nach Anspruch 9, wobei das obere Eisenjoch und das untere Eisenjoch einstückig gebildet sind, und in einer Ebene angeordnet sind, die senkrecht zum Rotationsring ist, um die inneren und äußeren Seiten des unteren Abschnitts des Rotationsrings zu umgeben; und
der vertikale Ringmagnetabscheider weiter einen Druckausgleichskammer-Wassermantel hat, der an die magnetische Erregerspule angrenzend angeordnet ist.

11. Verfahren nach Anspruch 10, wobei das Stahlplattennetz einen mittleren Schichtabstand von 2 - 5 mm aufweist, vorzugsweise 3 mm aufweist; und das Stahlplattennetz aus 1Cr17 gebildet ist; vorzugsweise das Stahlplattennetz eine Dicke von 0,8-1,5mm aufweist, eine Gittermaschengröße von 3 mm x 8 mm - 8 mm x 15 mm und eine Drahtbreite von 1 - 2 mm aufweist, vorzugsweise das Stahlplattennetz eine Dicke von 1 mm aufweist, eine Gittermaschengröße von 5 mm x 10 mm und eine Drahtbreite von 1,6 mm.

12. Verfahren nach Anspruch 11, wobei der vertikale Ringmagnetabscheider des Weiteren einen pulsierenden Mechanismus umfasst, der mit dem Resteeimer mittels einer Gummiplatte verbunden ist.

13. Verfahren nach Anspruch 12, wobei das induktive Medium im gesamten Kreis des Rotationsrings vorgesehen ist.

14. Verfahren nach Anspruch 13, wobei die magnetische Erregerspule eine flache Drahtmagnetspule ist, welche mit Doppelglas umhülltes emailliertes Aluminium ist.

15. Verfahren nach Anspruch 14, wobei die Magnetfeldstärke des vertikalen Ringmagnetabscheiders 15.000 Gs oder mehr beträgt, bevorzugt 15.000 - 20.000 Gs, weiter bevorzugt 15.000 - 17.500 Gs.

## Revendications

1. Procédé d'extraction de gallium de cendres volantes, comprenant les étapes suivantes :
a) broyer les cendres volantes à une taille de particule de passage à travers un tamis avec la taille d'ouverture de tamis de 150 µm (maille 100), enlever le fer par séparation magnétique humide, de telle manière que la teneur en oxydes ferriques dans les cendres volantes est réduite à 1,0 % en poids ou moins, puis ajouter de l'acide chlorhydrique dans les cendres volantes dé-ironisées et effectuer une réaction de lixiviation acide, et soumettre le produit réactionnel à une séparation solide-liquide pour donner un lixiviat chlorhydrique ayant une valeur de pH dans la plage de 1 à 3 ;
b) adsorber le gallium dans le lixiviat chlorhydrique en le passant à travers une colonne chargée avec une résine cationique macro-poreuse ; éluer la colonne avec de l'eau ou de l'acide chlorhydrique comme agent d'élution quand l'adsorption atteint la saturation pour obtenir un éluant contenant du gallium ;
c) ajouter une solution d'hydroxyde de sodium dans l'éluant contenant du gallium pour le faire réagir, séparer les précipités après réaction par filtration pour obtenir une solution de métaaluminate de sodium contenant du gallium ;
d) soumettre la solution de métaaluminate de sodium contenant du gallium à une carbonation en introduisant du dioxyde de carbone à l'intérieur, puis séparer le gallium de la plupart de l'aluminium pour obtenir un sel double de gallium-aluminium avec le rapport en masse du gallium à l'alumine qui est de plus de 1 : 340 ;
et
e) ajouter le sel double de gallium-aluminium dans une solution d'hydroxyde de sodium, soumettre le réactif à l'évaporation et la concentration pour obtenir une solution de base contenant du gallium et de l'aluminium avec les teneurs de gallium et d'alumine étant de 1 mole/l ou plus respectivement, puis électrolyser la solution de base pour obtenir le gallium métallique.

2. Procédé selon la revendication 1, dans lequel, dans l'étape a), la concentration de l'acide chlorhydrique est de 20 à 37 % en poids ; et le rapport molaire du HCl contenu dans l'acide chlorhydrique à l'alumine contenue dans les cendres volantes est de 4 : 1 à 9 : 1 ; de préférence, dans la réaction de lixiviation acide de l'étape a), la température réactionnelle est de 100 à 200 °C, la pression réactionnelle est de 0,1 à 2,5 MPa, et le temps réactionnel est de 0,5 à 4,0 heures.

3. Procédé selon la revendication 1, dans lequel, dans l'étape b), la résine cationique macro-poreuse est une résine cationique à acides forts et de préférence choisie parmi les résines de styrène ou les résines acryliques ; encore de préférence, les performances essentielles de la résine comprennent une teneur en humidité de 50,0 à 70,0 %, une capacité d'échange de plus de 3,60 mmoles/g ou plus, une capacité d'échange de volume de 1,2 mmoles/g ou plus, une densité en masse dans l'état humide de 0,60 à 0,80 g/ml, une taille de particule de 0,315 à 1,250 mm, une taille de particule efficace de 0,400 à 0,700 mm et une température de travail maximum de 95 °C ; et
dans l'étape b), l'adsorption du gallium dans le lixiviat chlorhydrique en passant le lixiviat chlorhydrique à travers la colonne de la partie inférieure à la partie supérieure avec un flux de volume de 1 à 4 fois le volume de résine par heure à 20 à 90 °C ; de préférence, l'élution de ladite résine cationique macro-poreuse avec 2 à 10 % en poids d'acide chlorhydrique comme agent d'élution, et davantage de préférence, la température d'élution est de 20 à 60 °C, la quantité de l'agent d'élution utilisé est de 1 à 3 fois le volume de la résine et la vitesse d'élution est de 1 à 3 fois le volume de résine par heure.

4. Procédé selon la revendication 1, dans lequel, dans l'étape c), la concentration de la solution d'hydroxyde de sodium est de 180 à 240 g/l ; de préférence, la température réactionnelle est de 20 à 100 °C.

5. Procédé selon la revendication 1, dans lequel, dans l'étape d), la carbonation par l'introduction de dioxyde de carbone dans la solution de métaaluminate de sodium contenant du gallium comprend les étapes de :
effectuer une carbonation primaire : introduire du dioxyde de carbone dans la solution mère de métaaluminate de sodium contenant du gallium obtenue dans l'étape c), dans laquelle le débit de dioxyde de carbone se situe dans la plage de 80 à 160 ml/minute, la température réactionnelle est contrôlée dans la plage de 40 à 90 °C, le temps de carbonation est dans la plage de 4 à 10 h, la valeur de pH à la fin de la réaction se situe dans la plage de 10,6 à 9,7, puis séparer les précipités de la solution par filtration, pour séparer le gallium de l'aluminium pour la première fois :
effectuer une carbonation secondaire : encore introduire du dioxyde de carbone dans la solution obtenue de la carbonation primaire après la séparation des précipités d'hydroxyde d'aluminium, dans laquelle le débit de dioxyde de carbone se situe dans la plage de 100 à 160 ml/minute la température réactionnelle est contrôlée dans la plage de 30 à 60 °C, le temps de carbonation se situe dans la plage de 3 à 7 h, la valeur du pH à la fin de la réaction se situe dans la plage de 9,8 à 9,0, pour précipiter tout l'aluminium sous forme d'hydroxyde d'aluminium et la plupart du gallium ; soumettre le réactif à une filtration pour obtenir le sel double de gallium-aluminium ; puis cristalliser le carbonate de sodium dans le filtrat obtenu de la filtration par évaporation et concentration et séparer le carbonate de sodium cristallisé de la solution ; puis recycler le filtrat contenant une faible quantité de gallium obtenu après la séparation du carbonate de sodium au début de la carbonation secondaire pour une autre carbonation.

6. Procédé selon la revendication 5, dans lequel, dans l'étape d), quand le rapport en masse de gallium à alumine dans le sel double de gallium-aluminium obtenu après la carbonation primaire et la carbonation secondaire est inférieur ou égal à 1 : 340, dissoudre le sel double dans une solution d'hydroxyde de sodium ou la solution mère de métaaluminate de sodium et répéter la carbonation primaire et la carbonation secondaire jusqu'à ce que le rapport en masse de gallium à alumine dans le dernier sel double de gallium-aluminium soit de plus de 1 : 340.

7. Procédé selon la revendication 1, dans lequel, dans l'étape e), la concentration de la solution d'hydroxyde de sodium est de 180 à 245 g/l ; de préférence, la température réactionnelle dans l'étape e) est de 20 à 100 °C.

8. Procédé selon la revendication 1, dans lequel, dans l'étape e), quand la solution de base contenant l'aluminium et le gallium est électrolysée, des électrodes en platine sont utilisées comme électrodes négative et positive, le courant d'électrolyse se situe dans la plage de 180 à 200 mA/l, la tension d'électrolyse se situe dans la plage de 4V et la température du bain électrolytique se situe dans la plage de 35 à 45 °C.

9. Procédé selon l'une quelconque des revendications 1 à 8, dans lequel, dans l'étape a), l'appareil utilisé pour la dé-ironisation par séparation magnétique humide est un séparateur magnétique d'anneau vertical qui comprend un anneau de rotation, un milieu inducteur, un empiècement en fer supérieur, un empiècement en fer inférieur, une bobine d'excitation magnétique, une ouverture d'alimentation, un caisson à résidus et un dispositif de lavage à l'eau, où l'ouverture d'alimentation est utilisée pour alimenter les cendres de charbon pour être dé-ironisées, le caisson à résidus est utilisé pour décharger les particules non magnétiques après dé-ironisation, l'empiècement en fer supérieur et l'empiècement en fer inférieur sont respectivement disposés aux côtés interne et externe de la partie inférieure de l'anneau de rotation, le dispositif de lavage à l'eau est disposé au-dessus de l'anneau de rotation, le milieu inducteur est disposé dans l'anneau de rotation, la bobine d'excitation magnétique est disposée à la périphérie de l'empiècement en fer supérieur et de l'empiècement en fer inférieur pour faire de l'empiècement en fer supérieur et de l'empiècement en fer inférieur une paire de pôles magnétiques pour produire un champ magnétique dans la direction verticale, et où le milieu inducteur est constitué de couches de mailles de plaque en acier, chaque maille de plaque en acier est enroulée par des fils, et les bords des fils ont des angles aigus prismatiques.

10. Procédé selon la revendication 9, dans lequel l'empiècement en fer supérieur et l'empiècement en fer inférieur sont formés intégralement, et sont disposés, dans un plan perpendiculaire à l'anneau de rotation, pour entourer les côtés interne et externe de la partie inférieure de l'anneau de rotation ; et
le séparateur magnétique d'anneau vertical comprend en outre une chemise d'eau de chambre d'équilibre de pression adjacente à la bobine d'excitation magnétique.

11. Procédé selon la revendication 10, dans lequel la maille de plaque en acier a un espacement de couche moyenne de 2 à 5 mm, de préférence de 3 mm ; et la maille de plaque en acier est constituée de 1Cr17 ; de préférence, la maille de plaque en acier a une épaisseur de 0,8 à 1,5 mm, une taille de grille de maille de 3 mm x 8 mm à 8 mm x 15 mm, et une largeur de fil de 1 à 2 mm, davantage de préférence, la maille de plaque en acier a une épaisseur de 1 mm, une taille de grille de maille de 5 mm x 10 mm et une largeur de fil de 1,6 mm.

12. Procédé selon la revendication 11, dans lequel le séparateur magnétique d'anneau vertical comprend en outre un mécanisme de pulsation, qui est couplé avec le caisson à résidus via une plaque en caoutchouc.

13. Procédé selon la revendication 12, dans lequel le milieu inducteur est disposé dans le cercle entier de l'anneau de rotation.

14. Procédé selon la revendication 13, dans lequel la bobine d'excitation magnétique est une bobine à solénoïde à fil plat qui est de l'aluminium émaillé d'une enveloppe en double verre.

15. Procédé selon la revendication 14, dans lequel la force du champ magnétique du séparateur magnétique d'anneau vertical est de 15 000 G ou plus, de préférence de 15 000 à 20 000 G, encore de préférence de 15 000 à 17 500 G.
